(19) Europäisches Patentamt

European Patent Office

Office européen des brevets

(11) **EP 2 879 011 B1**

(12) **EUROPEAN PATENT SPECIFICATION**

(45) Date of publication and mention
of the grant of the patent:
**03.02.2021   Bulletin 2021/05**

(51) Int Cl.:
***B64G 1/36*** (2006.01)

(21) Application number: **13005606.2**

(22) Date of filing: **02.12.2013**

(54) **On-board estimation of the nadir attitude of an Earth orbiting spacecraft**

Bordeigene Schätzung der Schräglage eines die Erde umkreisenden Raumflugkörpers

Estimation à bord de l'attitude de nadir d'un engin spatial en orbite terrestre

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.06.2015   Bulletin 2015/23**

(73) Proprietor: **Airbus Defence and Space GmbH
82024 Taufkirchen (DE)**

(72) Inventors:
• **Fichter, Walter
D-78464 Konstanz (DE)**

• **Levenhagen, Jens
D-88090 Immenstaad (DE)**

(74) Representative: **Frenkel, Matthias Alexander
Wuesthoff & Wuesthoff
Patentanwälte PartG mbB
Schweigerstrasse 2
81541 München (DE)**

(56) References cited:
**EP-A2- 0 856 784     DE-A1- 4 112 361
DE-A1- 19 846 690     US-A- 5 412 574
US-A1- 2013 103 343**

**Description**

The invention relates to a method of the on-board nadir attitude estimation of a spacecraft comprising a number of sensors.

Whenever Earth oriented safe modes of a spacecraft moving on an orbit are required, a three-axis nadir pointing reference must be established for attitude control. Usually, this requires sensors additional to an Earth sensor. In case of a Sun sensor or a magnetometer, absolute time knowledge together with models of the Sun vector and/or the magnetic Earth field vector is necessary. However, absolute time is not necessarily available in a safe mode, e.g. after computer re-initializations. Moreover, complex models should be avoided in a safe mode.

Document US 5,412,574 A discloses a method for attitude measurement for a satellite using a star sensor, wherein the star sensor measurements have to be compared to a star catalog.

It is therefore an objective of the present invention to provide a method capable of obtaining a three-axis reference for attitude control in a safe mode of a spacecraft.

This objective is achieved by a method according to claim 1. Preferred embodiments are set out in the dependent claims.

The invention is based on the consideration that by using measurements of a star sensor in addition to an Earth sensor, absolute time information can be avoided to obtain a three-axis reference for attitude control of a spacecraft, in particular a satellite. Furthermore, filtering of data can be avoided, i.e., issues of observability, initialization, convergence, and model validity are eliminated. The calculation of the attitude itself is numerically simple and robust.

The star sensor is arranged such that stars are in its field of view whenever the Earth vector can be measured by means of the Earth sensor. The star sensor (sometimes referred to as a star tracker) is an optical device that measures the direction(s) of star(s) using photocell(s) or a camera.

The method comprises the steps of claim 1.

The problem mentioned above is solved by obtaining two vector pairs, each vector pair consisting of a measurement in the body-fixed frame and a corresponding vector in the orbit reference frame. While the first vector pair which is given by the Earth direction can be directly derived from a measurement, the second vector pair is calculated through the orbit plane. Using these two vector pairs the three-axis attitude of the spacecraft, for example a satellite, can be reconstructed. For reconstruction, the TRIAD method or any other approach may be used.

For determining the orbit normal vector a number of measurements of the Earth vector may be executed.

The number of measured Earth vectors may be averaged before processing.

In particular, only such Earth vectors may be averaged which are close to being collinear.

The invention further suggests a computer program product directly loadable into the internal memory of a digital computer, comprising software code portions for performing the steps described above when said product is run on a computer. The computer may be an on-board computer of the spacecraft.

Summarizing, the method according to the invention allows for reference direction calculation of nadir orientation in a safe mode which requires no absolute time. Further advantages are

- simple averaging, practically exact model, no conventional model based filtering;
- initialization issues are eliminated;
- convergence problems are eliminated;
- complex dynamic models are eliminated;
- ephemeris models are eliminated (such as sun direction etc.);
- no absolute time required;

The invention will be described in more detail by reference to the accompanying figures.

Fig. 1   shows a schematically view of an orbit configuration and used reference coordinate systems.

Fig. 2   shows a diagram illustrating the basic steps of the method according to the invention.

The following definitions and assumptions are made for the following description. Sensor measurements are:

- An earth vector e, wherein $|e| = 1$.
- A star sensor attitude with respect to the inertial reference frame, expressed as a direction cosine matrix $T_{BI}$, representing a transformation from an inertial frame to a body-fixed frame

It is assumed that there is always a star sensor measurement available, i.e. at least one sensor head is neither blinded by sun nor directed towards the Earth.

Further assumptions:

- The spacecraft whose three-axis attitude shall be determined is in an Earth orbit. There are no further restrictions on the orbit parameters, i.e. it can be circular or eccentric, polar, equatorial, or inclined, etc.

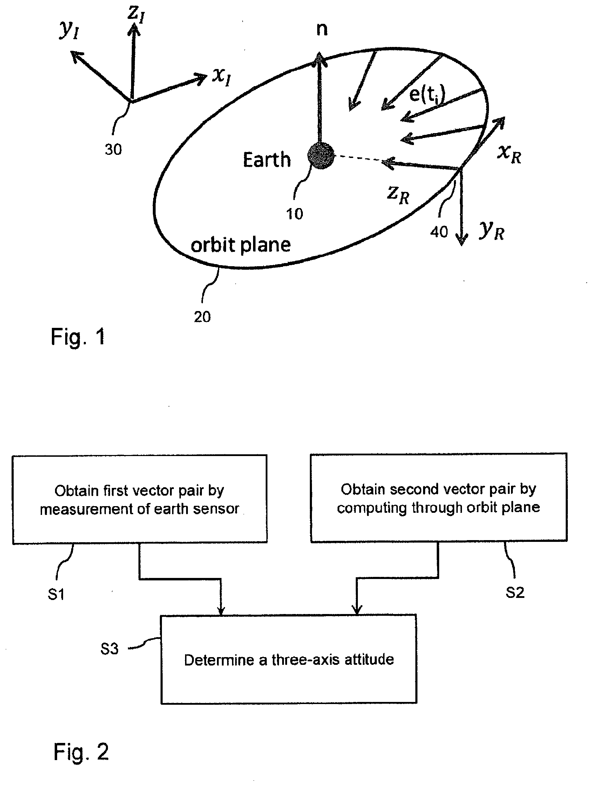

The orbit configuration is shown in Fig. 1. In Fig. 1, the Earth is depicted with 10. An orbit plane is depicted with 20. The orbit plane orientation is time dependent with time constants of days or larger. In the orbit configuration two coordinate systems are outlined which will be used for determining the attitude of the spacecraft. First, an inertial reference frame 30 consisting of perpendicular axes $x_I$, $y_I$ and $z_I$ with subscript "I" and an orbit reference frame 40 consisting of perpendicular axes $x_R$, $y_R$ and $z_R$ with subscript "R" are shown. The inertial reference frame 30 is any right handed inertial reference frame. Origin of the inertial reference frame 30 is the earth center. The star sensor (not illustrated) provides inertial attitudes, described by a direction cosine matrix $T_{BI}$ with respect to this system (from I to B). Furthermore, a number of time-dependent earth vectors $e(t_i)$ and an orbit normal vector n (hereinafter referred to as orbit normal) are illustrated.

The orbit reference frame 40 consists of the axes:

$y_R$:     negative orbit normal.

$z_R$:     nadir which is at a given point the local vertical direction pointing in the direction of the force of gravity at that location.

$x_R$:     right hand system

Origin of orbit reference frame 40 is the actual center of mass of the spacecraft which is not illustrated in Fig. 1. The orbit reference frame 40 represents a standard LVLH (local vertical local horizontal) reference system.

The Earth vectors are denoted with a subscript $(\cdot)_I$ when expressed in the inertial reference frame 30 or $(\cdot)_R$ when expressed in the orbit reference frame 40. The Earth vector in the orbit reference frame 40 is given by $e_R = (0\ 0\ 1)^T$.

To determine the three-axis-attitude of the spacecraft without the necessity of using an absolute time, two vector pairs, each pair consisting of a measurement in the body-fixed frame (not shown in Fig. 1) and a corresponding vector in the orbit reference frame 40 are used.

A first vector pair can be derived from the earth direction which is acquired and determined, respectively, through the earth sensor of the spacecraft (cf. step S1 in Fig. 2). The first vector pair is given by:

- the measurement of the Earth vector e in the body-fixed frame; and
- a reference vector $e_R = (0\ 0\ 1)^T$ in the orbit reference frame.

The second vector pair will be calculated through the orbit plane 20 (cf. step S2 in Fig. 2). This yields a pseudo-measurement y in body coordinates with a corresponding reference vector $y_R = (0\ 1\ 0)^T$. Using these two vector pairs the three-axis attitude of the spacecraft can be reconstructed (cf. step S3 in Fig. 2). This may be done, for example with the known TRIAD method which is a solution to spacecraft attitude determination problems. However, any other approach may be used as well.

Calculating the second vector pair will be described in more detail below.

As a first step, the orbit normal $n_I$ in the inertial reference frame 30 is calculated. The orbit normal $n_I$ corresponds to the negative $y_R$ axis of the orbit reference frame 40.

Since the orbit normal $n_I$ in the inertial frame is almost constant, it changes with the dynamics of the orbit plane orientation 20 over a time of days. Nominally, the orbit normal $n_I$ is perpendicular to any of the Earth vectors. Therefore it is at each time instant

$$e_I(t_i)^T \cdot n_I = (T_{IB}(t_i) \cdot e(t_i))^T \cdot n_I = 0$$

Taking N measurements yields

$$\begin{pmatrix} e_I(t_1) \\ e_I(t_2) \\ \vdots \\ e_I(t_N) \end{pmatrix} \cdot n_I = \begin{pmatrix} 0 \\ 0 \\ \vdots \\ 0 \end{pmatrix} = E \cdot n_I$$

This is a linear, homogeneous and (practically) over determined system, because there are usually more than two vector measurements. At the same time the matrix $E \in \square^{N \times 3}$ has nominally rank 2, since all vectors lie in a plane. The solution of the orbit normal represents the nullspace of the matrix E. With a singular value decomposition $E = V \cdot \Sigma \cdot U^T$, it is $V \in \square^{N \times N}$, $\Sigma \in \square^{N \times 3}$, with the upper 3 x 3 matrix being diagonal with its singular values, and $U \in \square^{3 \times 3}$. The solution $n_I$ is the row of $U^T$ that belongs to the smallest singular value, i.e. $\Sigma(3, 3)$, which is the last row of $U^T$.

The SVD (Singular Value Decomposition) solution outlined above can be calculated offline very conveniently. On an onboard computer of the spacecraft, another approach may have to be chosen. The following approach known as "Cross Product Averaging" shows one possibility.

A pair of two linearly independent earth vectors can be used to compute an orbit normal $n_I$.

$$\frac{e_I(t_i) \times e_I(t_j)}{|e_I(t_i) \times e_I(t_j)|} = n_I(t_i), \qquad t_i > t_j$$

Let $t_i$ be the current time and $t_j$ be past time instances. Using I past time instances $t_j$, j = 1...I, the orbit normal $n_I$ can be averaged by

$$\hat{n}_I = \frac{1}{l}\sum_{t_i}^{t_i} n_I(t_i) \bigg/ \left| \frac{1}{l}\sum_{t_i}^{t_i} n_I(t_i) \right|$$

There is some design choice in selecting the time difference $t_i$ - $t_j$ and the frequency of the calculation. From an illustrative point of view, a time difference corresponding to an angle of about 90 deg seems appropriate.

As a second step, the negative orbit normal is transformed from the inertial reference frame 30 into the body-fixed frame. This corresponds to a "measurement" (called pseudo-measurement) of the axis in body-fixed coordinates. It is

$$y = T_{BI} (-n_I)$$

As a third step, the reconstruction of the three-axis attitude of the spacecraft is performed using two vector pairs determined before. As set out, this may be done by the known TRIAD method.

Measurements are:

- z = e,
- 
$$y = T_{BI} (-n_I),$$

  and
- x = y x z.

References are:

- $z_R = e_R = (0\ 0\ 1)^T$,
- $y_R = (0\ 1\ 0)^T$,
- $x_R = y_R \times z_R$.

To calculate attitude, it is

$$[x\ \ y\ \ z] = T_{BR} \cdot [x_R\ \ y_R\ \ z_R]$$

With the notation

$$M = [x\ \ y\ \ z],$$

and

$$R = [x_R\ \ y_R\ \ z_R]$$

the unknown attitude with respect to the "orbit reference frame (LVLH)" is then given by

$$T_{BR} = M\ R^T.$$

As an improvement of the method described above, a data reduction can be performed. In case of a large time span $t_i$ - $t_j$, the amount of data (inertial Earth vectors) to be stored on-board can be reduced by using sets of inertial earth vectors that are close to being collinear and average them first. Then, with these averaged earth vectors, the cross-products can be calculated and orbit normal can be averaged as above. The important issue is that the out-of-plane uncertainty is averaged out.

Summarizing, the fundamental principle of the method is to calculate the orbit normal, without using filtering and/or any a priori knowledge. There are several ways to accomplish this. The most elegant, but computationally most expensive way is a so-called singular value decomposition (to be applied to the matrix E described above). All other methods described are just examples how this can be accomplished in a more simplified manner. In practice, there may be many derivations.

**List of Reference Numerals**

| 10 | earth |
|----|-------|
| 20 | orbit plane |
| 30 | inertial reference frame |
| 40 | orbit reference frame |
| S1 | step 1 |
| S2 | step 2 |
| S3 | step 3 |

**Claims**

1. A method of on-board nadir attitude estimation of a spacecraft, the method comprising the steps of:

   a) determining a first vector pair and a second vector pair, each vector pair consisting of a measurement of a vector in a body-fixed frame and a corresponding vector in an orbit-reference frame,
   wherein determining the first vector pair comprises

   a1) determining, by an Earth sensor of the spacecraft having a predetermined field of view and sensing a direction to Earth which is represented by an Earth vector (e), the first vector pair consisting of a measurement of the Earth vector (e) which is represented in the body-fixed frame and a corresponding vector ($e_R$) which is represented in the orbit reference frame (40) whose origin is the actual center of mass of the spacecraft;

wherein determining the second vector pair comprises

a2) determining the second vector pair by calculating a vector (y) in the body-fixed frame and a corresponding vector ($y_R$) in the orbit reference frame (40),

wherein step a2) comprises the steps of

a21) determining an orbit normal vector ($n_I$) in an inertial reference frame (30) by executing a number (N) of measurements of the Earth vector ($e_I(t_i)$, i=1...N), and

a22) transforming the orbit normal vector ($n_I$) from the inertial reference frame (30) into the body-fixed frame so as to receive the vector (y) in the body-fixed frame, which corresponds to a pseudo-measurement of the vector y in the body-fixed frame,

a23) and wherein the corresponding vector ($y_R$) in the orbit-reference frame (40) corresponds to the negative orbit normal vector ($-n_I$) in the inertial reference frame determined in step a21);

wherein the origin of the inertial reference frame (40) is the center of Earth and the coordinates thereof are derived from inertial attitudes provided by a star sensor of the spacecraft and described by a direction cosine matrix (TBI) representing a transformation from the inertial reference frame to the body-fixed frame, wherein the star sensor is arranged such that stars are in its field of view whenever the Earth vector (e) can be measured by means of the earth sensor;

wherein the method further comprises the step of

b) determining a three-axis attitude of the spacecraft by processing the first and the second vector pair.

2. The method according to claim 1, wherein determining the orbit normal vector ($n_I$) in the inertial reference frame (30) is based on determining the nullspace of a matrix comprising the Earth vector measurements.

3. The method according to claim 2, wherein the number of measured Earth vectors ($e_I$) is averaged before processing.

4. The method according to claim 3, wherein only such Earth vectors ($e_I$) are averaged which are close to being collinear.

5. The method according to one of claims 1 to 4, wherein cross-products of the amount of measurements are calculated.

6. The method according to one of the preceding claims, wherein the determination of the three-axis attitude of the spacecraft in step b) is made using the TRIAD algorithm.

7. A computer program product directly loadable into the internal memory of a digital computer, comprising software code portions for performing the steps of one of the preceding claims when said product is run on a computer.

**Patentansprüche**

1. Verfahren zur bordeigenen Schätzung der Schräglage eines Raumflugkörpers, wobei das Verfahren die folgenden Schritte umfasst:

a) Bestimmen eines ersten Vektorpaares und eines zweiten Vektorpaares, wobei jedes Vektorpaar aus einer Messung eines Vektors in einem körperfesten Bezugssystem und einem entsprechenden Vektor in einem Orbit-Bezugssystem besteht,

wobei das Bestimmen des ersten Vektorpaars umfasst

a1) Bestimmen, durch einen Erdsensor des Raumflugkörpers, der ein vorbestimmtes Sichtfeld hat und eine Erdrichtung erfasst, die durch einen Erdvektor (e) repräsentiert wird, des ersten Vektorpaars, das aus einer Messung des Erdvektors (e) besteht, der in dem körperfesten Bezugssystem dargestellt ist, und einem entsprechenden Vektor ($e_R$), der in dem Orbit-Bezugssystem (40) dargestellt ist, dessen Ursprung der tatsächliche Massenschwerpunkt des Raumflugkörpers ist;

wobei das Bestimmen des zweiten Vektorpaars umfasst

a2) Bestimmen des zweiten Vektorpaars durch Berechnen eines Vektors (y) in dem körperfesten Bezugssystem und eines entsprechenden Vektors ($y_R$) im Orbit-Bezugssystem (40),

wobei Schritt a2) die Schritte umfasst:

a21) Bestimmen eines Orbit-Normalenvektors ($n_I$) in einem Inertialsystem (30) durch Ausführen einer Anzahl (N) von Messungen des Erdvektors ($e_I(t_i)$, i=1 ... N), und

a22) Transformieren des Orbit-Normalenvektors ($n_I$) von dem Inertialsysten (30) in das körperfeste Bezugssystem, um so den Vektor (y) in dem körperfesten Bezugssystem zu erhalten, der einer Pseudo-Messung des Vektors y in dem körperfesten Bezugssystem entspricht,

a23) und wobei der entsprechende Vektor ($y_R$) in dem Orbit-Bezugssystem (40) dem in dem Schritt a21) ermittelten negativen Orbit-Normalenvektor ($-n_I$) in dem Inertialsystem entspricht;

wobei der Ursprung des Inertialsystems (40) der Erdmittelpunkt ist und dessen Koordinaten von durch einen Sternsensor des Raumflugkörpers bereitgestellten inertialen Fluglagen abgeleitet sind und durch eine Transformation von dem Inertialsystem zu dem körperfesten Bezugssystem repräsentierende Richtungskosinus-Matrix (TBI) beschrieben werden, wobei der Sternsensor so angeordnet ist, dass Sterne in seinem Sichtfeld immer dann vorliegen, wenn der Erdvektor (e) mittels des Erdsensors messbar ist; wobei das Verfahren ferner den Schritt umfasst:

b) Bestimmen einer dreiachsigen Fluglage des Raumflugkörpers durch Verarbeiten des ersten und des zweiten Vektorpaars.

2. Verfahren nach Anspruch 1, wobei das Bestimmen des Orbit-Normalenvektors ($n_I$) in dem Inertialsystem (30) auf der Bestimmung des Nullraums einer Matrix basiert, die die Erdvektormessungen umfasst.

3. Verfahren nach Anspruch 2, wobei die Anzahl der gemessenen Erdvektoren ($e_I$) vor der Verarbeitung gemittelt wird.

4. Verfahren nach Anspruch 3, **dadurch gekennzeichnet, dass** nur solche Erdvektoren ($e_I$) gemittelt werden, die nahezu kollinear sind.

5. Verfahren nach einem der Ansprüche 1 bis 4, **dadurch gekennzeichnet, dass** Vektorprodukte der Menge der Messungen berechnet werden.

6. Verfahren nach einem der vorhergehenden Ansprüche, wobei die Bestimmung der dreiachsigen Fluglage des Raumflugkörpers in Schritt b) unter Verwendung des TRIAD-Algorithmus erfolgt.

7. Computerprogrammprodukt, das direkt in den internen Speicher eines digitalen Computers ladbar ist, welches Softwarecodeabschnitte zum Ausführen der Schritte eines der vorhergehenden Ansprüche umfasst, wenn das Produkt auf einem Computer ausgeführt wird.

## Revendications

1. Procédé d'estimation de l'attitude de nadir à bord d'un véhicule spatial, le procédé comprenant les étapes consistant à :

a) déterminer une première paire de vecteurs et une seconde paire de vecteurs, chaque paire de vecteurs comprenant une mesure d'un vecteur dans un cadre fixé au corps et un vecteur correspondant dans un cadre de référence d'orbite, la détermination de la première paire de vecteurs consistant à

a1) déterminer, par un détecteur à référence terrestre du véhicule spatial ayant un angle de champ prédéfini et détecter une direction vers la Terre qui est représentée par un vecteur Terre (e), la première paire de vecteurs comprenant une mesure du vecteur Terre (e) qui est représentée par le cadre fixé au corps et un vecteur correspondant ($e_R$) qui est représenté dans le cadre de référence d'orbite (40) dont l'origine est le centre réel de masse du véhicule spatial ; la détermination de la seconde paire de vecteurs consistant à

a2) déterminer la seconde paire de vecteurs par calcul d'un vecteur (y) dans le cadre fixé au corps et un vecteur correspondant ($y_R$) dans le cadre de référence d'orbite (40),

l'étape a2) comprenant les étapes consistant à

a21) déterminer un vecteur normal d'orbite ($n_I$) dans un cadre de référence inertiel (30) par exécution d'un nombre (N) de mesures du vecteur Terre ($e_I(t_i)$, i=1....N), et

a22) transformer le vecteur normal d'orbite ($n_I$) à partir du cadre de référence inertiel (30) en cadre fixé au corps de manière à recevoir le vecteur (y) dans le cadre fixé au corps, qui correspond à une pseudo-mesure du vecteur y dans le cadre fixé au corps,

a23) et le vecteur correspondant ($y_R$) dans le cadre de référence d'orbite (40) correspondant au vecteur normal d'orbite négatif ($-n_I$) dans le cadre de référence inertiel déterminé à l'étape a21) ;

l'origine du cadre de référence inertiel (40) étant le centre de la Terre et ses coordonnées sont dérivées à partir des attitudes inertielles fournies par un viseur d'étoiles du véhicule spatial et décrites par une matrice de cosinus directeur (TBI) représentant une transformation du cadre de référence inertiel en cadre fixé au corps, le viseur d'étoiles étant disposé de sorte que les étoiles sont dans son angle de champ à chaque fois que le vecteur Terre (e) peut être mesuré au moyen du viseur d'étoiles ;

le procédé comprenant en outre les étapes consistant à

b) déterminer une attitude sur trois axes du véhicule spatial par traitement de la première et de la seconde paire de vecteurs.

2. Procédé selon la revendication 1, la détermination du vecteur normal d'orbite (nI) dans le cadre de référence inertiel (30) étant basée sur la détermination de l'espace nul d'une matrice comprenant les mesures de vecteur Terre.

3. Procédé selon la revendication 2, le nombre de vecteurs Terre mesurés ($e_I$) étant moyenné avant le traitement.

4. Procédé selon la revendication 3, seuls de tels vecteurs Terre ($e_I$) qui sont quasiment colinéaires, étant moyennés.

5. Procédé selon l'une quelconque des revendications 1 à 4, des produits vectoriels de la quantité de mesures sont calculés.

6. Procédé selon l'une quelconque des revendications précédentes, la détermination de l'attitude sur trois axes du véhicule spatial dans l'étape b) étant effectuée à l'aide de l'algorithme TRIAD.

7. Produit programme informatique pouvant être directement chargé dans la mémoire interne d'un ordinateur numérique, comprenant des parties de code de logiciel destinées à effectuer les étapes de l'une des revendications précédentes lorsque ledit produit est exécuté sur un ordinateur.

Fig. 1

Fig. 2

**REFERENCES CITED IN THE DESCRIPTION**

**Patent documents cited in the description**

- US 5412574 A